# EUROPEAN PATENT SPECIFICATION

(11) **EP 1 002 975 B1**
(45) Date of publication and mention of the grant of the patent: **26.03.2003**
(21) Application number: 98121918.1
(22) Date of filing: 18.11.1998
(51) Int. Cl.: F16K 27/07, F16K 41/04

(54) **Outlet valve assembly for a pressure vessel**
Auslassventil für einen Druckbehälter
Soupape de sortie d'un récipient sous pression

(43) Date of publication of application: 24.05.2000
(73) Proprietor: Pfaudler Werke GmbH, 68723 Schwetzingen (DE)
(72) Inventor: Reinemuth, Jürgen, Dr.-Ing., 69469 Weinheim (DE)
(74) Representative: Popp, Eugen, Dr.

(56) References cited:
- CH-A- 448 780
- GB-A- 2 117 496
- US-A- 4 513 770
- US-A- 4 934 403

## Description

The present invention relates to a valve assembly suitable for use in the discharge of pressure vessels, particularly valves employed in the chemical and pharmaceutical industries. More particularly, the invention relates to glass coated valves which are suitable for use when processing corrosive agents or substances.

Document GB-A-2 117 496 discloses a valve assembly having the features of the preamble of claim 1.

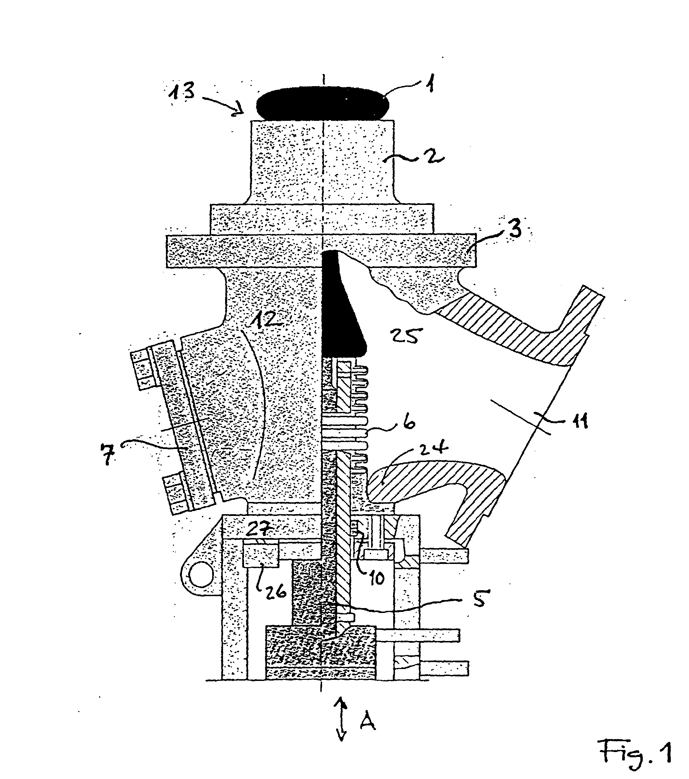

A conventional construction of an outlet valve is shown in Fig. 1, where the valve housing 12 comprises an inlet opening 13. When opened, fluid from the pressure vessel passes around the valve element 1 through the passageway 25 to an outlet port 11. A port 7 is disposed opposite the outlet port 11 for the purposes of inspection and service. The valve element 1 comprises a valve stem 5 actuated to produce reciprocal movement along its axis as indicated by the double arrow A in Fig. 1. The valve stem 5 may be actuated by pneumatic or mechanical means connected to the lower portion of the valve housing 12.

Within the housing 12, the valve stem 5 is protected from contact with potentially corrosive materials in the passageway 25 by means of a bellows seal 6 and the glassing between the bellow and the top of the stem 5. The lower flange of the bellows 6 is disposed between the bottom flange 24 of the housing 12 and the flange 27 of the actuator mechanism. In addition, the conventional assembly of Fig. 1 comprises packing rings 10 to ensure the prevention of leaks. The packing serves as a safety measure, should the bellows 6 fail.

The conventional assembly of Fig. 1 can be employed for many applications, where the bellows 6 and the glassing suitably protect the valve stem 5 from contact with corrosive substances. On the other hand, the grooves and crevices formed by the bellows 6 are in direct contact with the fluid in the passageway 25. With time the grooves collect material from the fluid. The deposited material or residues may eventually become a source of contamination for the fluid being passed. In particular, when the reaction or pressure vessel is employed for different processes in sequence, the residue of one process may represent a contamination for the next process. The bellows can be cleaned through the service port 7, however it is not always possible to provide a thorough cleaning. In addition, at the position where the bellows seat against the valve stem, a dead space is always present, where product residues or cleaning fluids can remain.

The object of the present invention is to provide a valve assembly in which the danger of contamination of a process through deposited residues is substantially avoided. A further object of the present invention is to provide a valve assembly in which the bellows type seal can be exchanged with a stuffing box type seal without alteration of the other valve element and control means in the valve housing.

According to the present invention, the valve assembly is provided as defined in Claim 1. A packing collar is provided which extends along the valve stem and is arranged circumferentially about the valve stem in a manner to hold a packing therebetween. Preferably, the packing collar is protected against corrosion with a glass or enamel coating. The packing collar comprises an inner end extending into the valve housing being partially exposed to the fluid passageway. A first form seal is disposed at the end of the packing collar next to the passageway. An annular end surface of the first form seal exposed to the passageway is configured to meet the outer surface of the valve stem with an angle of greater than 90° as measured from the longitudinal axis of the valve stem.

In a preferred embodiment, the first form seal is provided as part of the seal packing and is configured to engage in a form fit with the inner end of the packing collar. The form fit is adapted to prevent lateral movement of the form seal with respect to the packing collar as the valve stem undergoes axial movement.

In another preferred embodiment, the first form seal is formed integrally with the packing collar. In this case, the packing collar serves the function of providing support for the packing, provides the wiping function of the valve stem and also prevents the formation of dead space or crevices at the juncture between the valve stem and the packing box. In this embodiment, the packing collar is preferably formed as a steal structure or member which is coated with PTFE.

Preferably, the annular end surface of the form seal at its outer periphery joins the inner end of the packing collar in a substantially tangential configuration. This configuration again avoids the formation of any cracks or crevices which could collect contaminating material.

Preferably, the present valve assembly also comprises a second form seal disposed about the external surface of the packing collar and engaged with the lower flange of the housing. This second form seal also has an annular surface exposed to the passageway in such a manner that no crevices are formed. This second form seal is thus additionally configured to provide a relatively smooth transition from the housing flange to the packing collar under the avoidance of any sharp angles or corners.

Further objects and advantages of the present invention will become apparent through the following description of embodiments taken in conjunction with the drawings.
Fig. 1 illustrates a conventional outlet valve for use in conjunction with pressure or reaction vessels.
Fig. 2 shows an embodiment of the valve assembly according to the invention.
Fig. 3 shows an enlargement of a further embodiment with details of the packing box.
Fig. 4 shows an alternative construction for the packing collar.

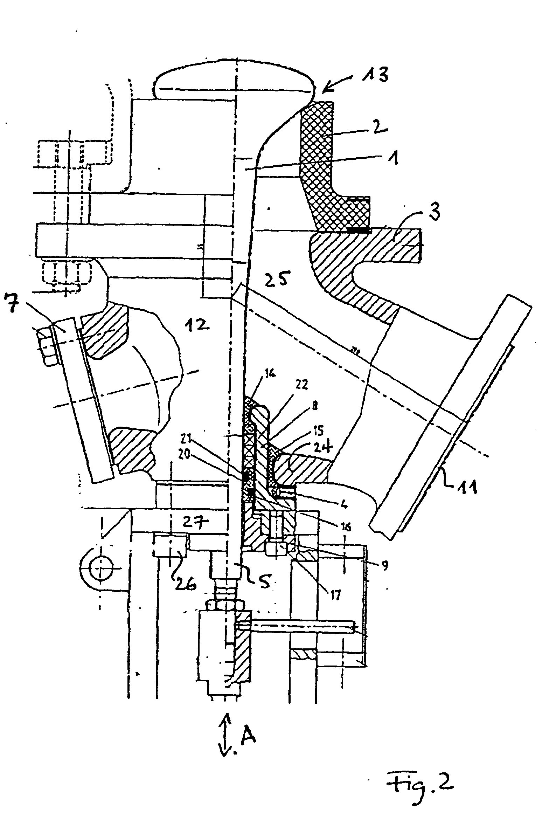

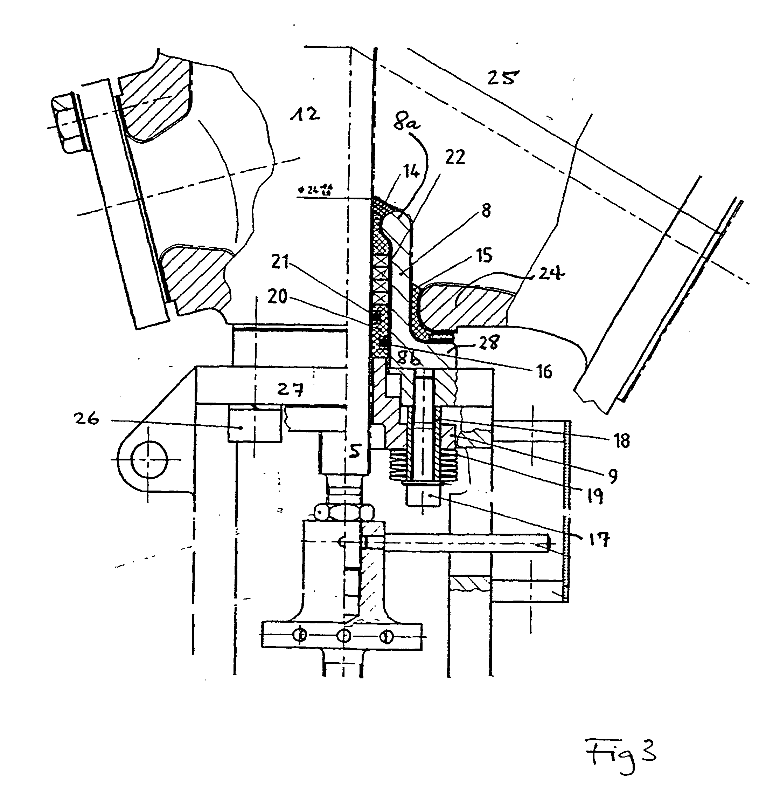

A preferred embodiment of the present invention will now be discussed in conjunction with Figs. 2 and 3. Elements having the same function as those of the prior art are denoted with the same reference numerals. Fig. 2 shows an overall illustration of the preferred valve assembly, while Fig. 3 illustrates an enlargement of the packing box arrangement.

In Fig. 2, the valve housing 12 is connected to a vessel by means of the upper flange 3. The valve element 1 engages the valve seat 2 to open or close the inlet aperture indicated at 13. The lower portion of the housing 12 has a flange 24 defining an opening through which the valve stem 5 passes. The actuator mechanism (not shown) for the valve stem 5 is connected to the lower flange 24 via the flange 27 by means of the bolts 26.

Fluid to be discharged from the vessel passes the inlet port 13 through the passageway 25 of the housing 12 and then to the outlet port 11 as in the conventional assembly. To avoid dead space or crevices, the bellows seal of the prior art (Fig. 1) is now replaced with a packing box defined by a glassed packing collar 8 which extends along the valve stem 5. In this embodiment, the valve element 1 and the valve stem 5 are formed integrally of one piece made of glassed steal. As shown in Fig. 2, the valve head 1 engages or disengages with the valve seat 2, which is made of a fibre reinforced PTFE material. The material is corrosion resistant to the potentially abrasive materials which may be encountered in practice. As in the prior art, the valve stem 5 is moved in its longitudinal direction as indicated by the double arrow A. The actuator means (not shown) may be pneumatic or mechanical.

As shown in Figs. 2 and 3, the packing box comprises a packing collar 8 which may be coated with glass or other corrosion resistant materials. The packing collar 8 extends along the valve stem 5 to receive the packing 20, 22, therebetween. At the end exposed to the passageway 25, a first form seal 14 is provided, which is slideably engagable with the valve stem 5, but held against lateral movement with respect to the inner end 8a of the collar 8 as best seen in Fig. 3. In this embodiment, the inner end 8a is formed with a rounded bulge or bead, where the form of the bead is matched by a surface of the first form seal 14. The material of the form seal 14 is preferably of PTFE, but may comprise other types of corrosion resistant materials known in the art. The material selection will depend upon the product composition being processed and temperature. In applications where fire may be a hazard, the sealing members may also be made of fire resistant materials, such a graphite.

The annular surface of the first form seal 14, which is exposed to the passageway 25, joins at an angle to the valve stem 5 which is greater than 90°. As illustrated in Fig. 3, this angle would be about 120°. In addition, the annular surface of the form seal 14 joins the inner end 8a of the collar 8 substantially tangential to the surface of the inner end 8a. With this configuration, it is apparent that no dead spaces or crevices are formed which could collect any sort of contamination from the fluid in the passageway 25.

As shown in Fig. 2, the packing collar 8 with its radially extending flange 28 is sandwiched between the lower flange 24 of the housing 12 and the flange 27 of the actuator assembly. An appropriate sealing element 4 is provided between the radial flange 28 and the flange 24 of the housing. Alternatively as shown in Fig. 3, the seal between the housing flange 24 and the radial flange 28 can be formed in one piece, extending unto the entire space between the radial flange 28 and the housing flange 24.

Returning to Fig. 2, prior to the seal 4, a second form seal 15 is arranged between the external surface of the collar 8 and the lower flange 24 of the housing 12. This form seal is also configured with an annular surface exposed to the passageway 25, which joins to the collar 8 and the flange 24 at an angle of greater than 90°. Thus, additionally at this location, no crevices are formed which would be capable of allowing deposits to be collected. As shown in Fig. 3, the annular surface of the second form seal 15 makes an angle of at least 120° with its adjoining elements. According to the invention, all joining elements of the first and second form seals are preferably greater than 120°.

Referring again to Fig. 2, the seal packing comprises two or more packing rings 22 disposed adjacent to the first form seal 14. In the direction away from the passageway 25, the seal rings are followed by a final or closing end seal 20, which is located in the area of the other end 8b of the packing collar 8. In this embodiment, the end seal 20 comprises grooves for receiving O-rings 16 and 21. As shown in Fig. 2, one O-ring engages the valve stem 5, while the other O-ring 16 engages the packing collar 8. Depending on the particular application, additional O-rings could be included on the valve stem side or on the collar side. O-rings provide a final safety factor in leak prevention. The packing system in Fig. 2, is loaded by means of the follower 9, which is arranged to urge against the end seal 20. The load applied to the packing system can be adjusted by the screws 17. Alternatively as shown in Fig. 3, the packing system may be actively loaded by spring force. In Fig. 3, a set of bellville springs are mounted on the screws 17 to urge the follower 9 into engagement with the packing.

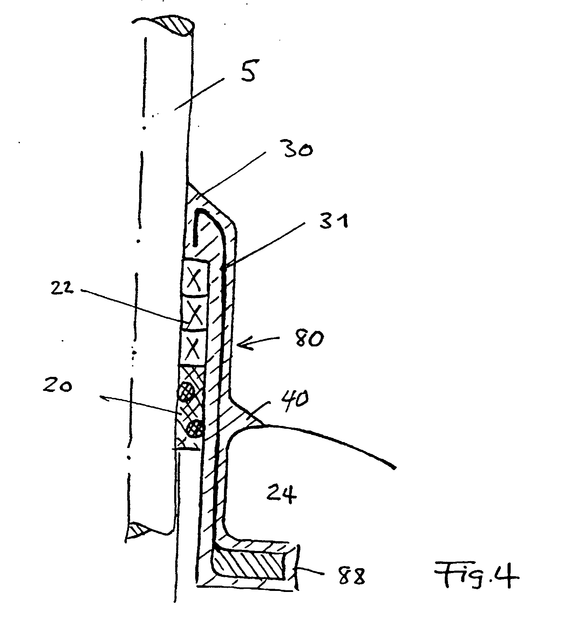

Turning to Fig. 4, another embodiment of the packing collar 80 is illustrated. In this embodiment the first form seal 30 is formed integrally with the packing collar at its end facing the passageway 25. In addition, the second form seal 40 is also integrally formed with the collar 80. As in the previous embodiments, the annular end surfaces of the first and second form seals 30, 40 make with the valve stem 5 and the flange 24 respectively are greater than 90° preferably greater than 120°. In this arrangement, the packing collar 80 may be formed of a steel insert or structure 31 which is embedded in a body of PTFE material. This embodiment has the advantage of a reduced number of parts and expediency in assembly and service.

The valve assembly of the present invention as illustrated in the above embodiment provides a number of advantages. By means of the smooth transition between the valve stem 5 and the packing collar 8, provided by the shape of the first form seal 14, no recesses are formed which could collect product residues. In addition, the first form seal 14 in one embodiment is configured in a form fit with respect to the end 8a of the collar 8. This form fit prevents lateral movement of the form seal 14, which thereby provides a support against which the packing rings 22 can be loaded by means of follower 9. This multi-functional property of the first form seal 14 allows a simplified packing system, at the same time avoids the problem of contamination collection.

## Claims

1. A valve assembly comprising
a housing (12) which defines a fluid passageway (25) from a fluid inlet (13) to a fluid outlet (11) of the housing (12),
a valve stem (5) mounted in the housing to move reciprocally, the valve stem (5) formed integrally with a valve head (1) to move the valve head (1) into engagement or disengagement with a valve seat (2) to control fluid flow through the passageway (25),
a packing collar (8, 80) extending along and arranged about the valve stem (5) to hold a seal packing (20, 22) therebetween for preventing leakage from the passageway (25) to the exterior of the housing (12),
a first form seal (14, 30) disposed at the end (8a) of the packing collar (8) exposed to the passageway (25), **characterised by** an annular end surface of the first form seal (14) exposed to the passageway (25) being configured to meet the exposed outer surface of the valve stem (5) with an angle of greater than 90° measured from the longitudinal axis of the valve stem (5).

2. The valve assembly of Claim 1, wherein the first form seal (14) is engaged in form fit against lateral movement with the end (8a) of the packing collar (8) which is exposed to the passageway (25).

3. The valve assembly of Claim 1 or 2, wherein the annular end surface of the first form seal (14) exposed to the passageway (25) meets said end (8a) of the packing collar (8) substantially tangential to the surface of the end (8a).

4. The valve assembly of Claim 1, 2 or 3, further comprising a second form seal (15) disposed between the external surface of said packing collar (8) and a flange (24) of the housing (12), the annular end surface of the second form seal (15) exposed to said passageway (25) meeting the external surface of the packing collar (8) and the surface of the flange (24) at angles of greater than 90°, respectively.

5. The valve assembly of Claim 4, wherein the packing collar (8) comprises a radially extending flange (28) for mounting to the housing flange (24), the second form seal (15) extending in to the space between the radial flange (28) and the housing flange (24).

6. The valve assembly of Claim 1, wherein the first form seal (30) is formed integrally with the packing collar (80).

7. The valve assembly of Claim 6, wherein the packing collar (80) has a second form seal (40) integrally formed on the external surface thereof, an annular end surface of the second form seal (40) exposed to the passageway (25) joining to the external surface of the packing collar (80) and meeting the surfaces of a flange (24) of the housing (12) at angles of greater than 90°, respectively.

8. The valve assembly of Claim 6 or 7, wherein the integral packing collar (80) is formed of a steel structure (31) embedded in PTFE.

9. The valve assembly of any one of the Claims 1 to 8, wherein said seal packing further comprises two or more packing rings (22) adjacent said first form seal (14) followed by a closing seal (20) disposed near the other end (8b) of said packing collar (8) in the direction away from said passageway (25).

10. The valve assembly of Claim 9, wherein at least one O-ring (21) is provided between said valve stem (5) and said closing seal (20) and at least one O-ring is provided between the interior surface of said packing collar (8) and said closing seal (20).

## Patentansprüche

1. Ventileinheit mit
einem Gehäuse (12), das einen Fluidkanal (25) von einem Fluideinlass (13) zu einem Fluidauslass (11) des Gehäuses (12) bildet,
einem Ventilschaft (5), der in dem Gehäuse angebracht ist, um sich hin- und herzubewegen, wobei der Ventilschaft (5) mit einem Ventilkopf (1) integral ausgebildet ist, um den Ventilkopf (1) in oder außer Eingriff mit einem Ventilsitz (2) zu bewegen, um einen Fluidstrom durch den Kanal (25) zu steuern,
einer Dichtungsmanschette (8, 80), die sich entlang des Ventilschafts (5) erstreckt und um diesen herum angeordnet ist, um eine Dichtungseinheit (20, 22) dazwischen zu halten, um einen Sickerverlust aus dem Kanal (25) zum Äußeren des Gehäuses (12) zu verhindern,
mit einer ersten Passdichtung (14, 30), die am Ende (8a) der dem Kanal (25) ausgesetzten Dichtungsmanschette (8) angeordnet ist, **gekennzeichnet durch** eine ringförmige Endfläche der dem Kanal (25) ausgesetzten ersten Passdichtung (14), die so ausgebildet ist, dass sie mit einem Winkel auf die freiliegende Außenfläche des Ventilschafts (5) trifft, der größer als 90° ist, gemessen von der Längsachse des Ventilschafts (5).

2. Ventileinheit nach Anspruch 1, bei der die erste Passdichtung (14) formschlüssig gegen seitliche Bewegung mit dem Ende (8a) der Dichtungsmanschette (8) in Eingriff ist, das dem Kanal (25) ausgesetzt ist.

3. Ventileinheit nach Anspruch 1 oder 2, bei der die ringförmige Endfläche der dem Kanal (25) ausgesetzten ersten Passdichtung (14) im wesentlichen tangential zur Fläche des Endes (8a) auf das Ende (8a) der Dichtungsmanschette (8) trifft.

4. Ventileinheit nach Anspruch 1, 2 oder 3, darüber hinaus eine zweite Passdichtung (15) umfassend, die zwischen der Außenfläche der Dichtungsmanschette (8) und einem Flansch (24) des Gehäuses (12) angeordnet ist, wobei die dem Kanal (25) ausgesetzte ringförmige Endfläche der zweiten Passdichtung (15) mit Winkeln auf die Außenfläche der Dichtungsmanschette (8) bzw. die Fläche des Flansches (24) trifft, die größer als 90° sind.

5. Ventileinheit nach Anspruch 4, bei der die Dichtungsmanschette (8) einen sich radial erstreckenden Flansch (28) zur Montage am Gehäuseflansch (24) umfasst, wobei sich die zweite Passdichtung (15) in den Raum zwischen dem radialen Flansch (28) und dem Gehäuseflansch (24) erstreckt.

6. Ventileinheit nach Anspruch 1, bei der die erste Passdichtung (30) integral mit der Dichtungsmanschette (80) ausgebildet ist.

7. Ventileinheit nach Anspruch 6, bei der die Dichtungsmanschette (80) eine zweite Passdichtung (40) aufweist, die an deren Außenfläche integral ausgebildet ist, wobei sich eine dem Kanal (25) ausgesetzte ringförmige Endfläche der zweiten Passdichtung (40) mit Winkeln an die Außenfläche der Dichtungsmanschette (80) anschließt bzw. auf die Flächen eines Flansches (24) des Gehäuses (12) trifft, die größer als 90° sind.

8. Ventileinheit nach Anspruch 6 oder 7, bei der die integrale Dichtungsmanschette (80) aus einer in PTFE eingebetteten Stahlstruktur (31) besteht.

9. Ventileinheit nach einem der Ansprüche 1 bis 8, bei der die Dichtungseinheit darüber hinaus zwei oder mehr Dichtungsringe (22) angrenzend an die erste Passdichtung (14) umfasst, gefolgt von einer Abschlussdichtung (20), die nahe dem anderen Ende (8b) der Dichtungsmanschette (8) in der Richtung weg vom Kanal (25) angeordnet ist.

10. Ventileinheit nach Anspruch 9, bei der mindestens ein O-Ring (21) zwischen dem Ventilschaft (5) und der Abschlussdichtung (20) vorgesehen ist, und mindestens ein O-Ring zwischen der Innenfläche der Dichtungsmanschette (8) und der Abschlussdichteng (20) vorgesehen ist.

## Revendications

1. Ensemble soupape comprenant
un boîtier (12) définissant un passage de fluide (25) d'une admission de fluide (13) vers une évacuation de fluide (11) du boîtier (12),
une tige de soupape (5) montée sur le boîtier de façon à pouvoir se déplacer de manière oscillante, la tige de soupape (5) étant formée d'une pièce avec une tête de soupape (1), pour placer la tête de soupape (1) en position d'engagement ou de désengagement avec un siège de soupape (2) de façon à contrôler un écoulement de fluide par le passage (25),
un collier de maintien (8, 80) disposé le long et autour de la tige de soupape (5) pour maintenir une garniture d'étanchéité (20, 22) interposée, de façon à empêcher une fuite du passage (25) vers l'extérieur du boîtier (12),
un premier joint formé (14, 30) disposé à l'extrémité (8a) de la garniture d'étanchéité (8) exposée au passage (25), **caractérisé en ce qu'une** surface annulaire en extrémité du premier joint formé (14) exposée au passage (25) est configurée pour rencontrer la surface extérieure exposée de la tige de soupape (5) selon un angle supérieur à 90° mesuré par rapport à l'axe longitudinal de la tige de soupape (5).

2. L'ensemble soupape de la revendication 1 dans lequel le premier joint formé (14) est engagé en adaptation de forme, pour prévenir un mouvement latéral, avec l'extrémité (8a) de la garniture de joint (8) qui est exposée au passage (25).

3. L'ensemble soupape de la revendication 1 ou 2 dans lequel la surface annulaire en extrémité du premier joint formé (14) exposée au passage (25) rencontre ladite extrémité (8a) du collier de maintien (8) de façon substantiellement tangentielle à la surface de l'extrémité (8a).

4. L'ensemble soupape de la revendication 1, 2 ou 3 comprenant en outre un deuxième joint formé (15) disposé entre la surface extérieure dudit collier de maintien (8) et une bride (24) du boîtier (12), la surface annulaire en extrémité du deuxième joint formé (15) exposée au passage (25) rencontrant la surface extérieure du collier de maintien (8) et la surface de la bride (24) selon des angles supérieurs à 90°, respectivement.

5. L'ensemble soupape de la revendication 4 dans lequel le collier de maintien (8) comprend une bride (28) s'étendant radialement pour montage à la bride de boîtier (24), le deuxième joint formé (15) s'étendant dans l'espace entre la bride radiale (28) et la bride de boîtier (24).

6. L'ensemble soupape de la revendication 1 dans lequel le premier joint formé (30) est formé d'une pièce avec le collier de maintien (80).

7. L'ensemble soupape de la revendication 6 dans lequel le collier de maintien (80) comprend un deuxième joint formé (40) rapporté par formage à sa surface extérieure, une surface annulaire en extrémité du deuxième joint formé (40) exposée au passage (25) rejoignant la surface extérieure du collier de maintien (80) et rencontrant les surfaces d'une bride (24) du boîtier (12) selon des angles supérieurs à 90°, respectivement.

8. L'ensemble soupape de la revendication 6 ou 7 dans lequel le collier de maintien (80) intégré est formé d'une structure d'acier (31) noyée dans du PTFE.

9. L'ensemble soupape selon l'une quelconque des revendications 1 à 8 dans lequel ladite garniture de joint comprend en outre deux bagues d'étanchéité (22) ou plus, adjacentes audit premier joint formé (14), suivies par un joint de fermeture (20) disposé près de l'autre extrémité (8b) dudit collier de maintien (8) dans la direction s'écartant dudit passage (25).

10. L'ensemble soupape de la revendication 9 dans lequel au moins un joint torique (21) existe entre ladite tige de soupape (5) et ledit joint de fermeture (20) et au moins un joint torique existe entre la surface intérieure dudit collier de maintien (8) et ledit joint de fermeture (20).
